# EUROPÄISCHE PATENTSCHRIFT

(11) **EP 3 750 615 B1**
(45) Veröffentlichungstag und Bekanntmachung des Hinweises auf die Patenterteilung: **08.12.2021**
(21) Anmeldenummer: 19179860.2
(22) Anmeldetag: 13.06.2019
(51) Int. Cl.: B01D 46/10, B01D 46/24, B01D 46/52

(54) **FILTERELEMENT MIT SPEZIALFALTUNG UND KASSETTENFILTER MIT SOLCHEN FILTERELEMENTEN UND FILTERPATRONE MIT EINEM SOLCHEN FILTERELEMENT**
FILTER ELEMENT WITH SPECIAL FOLD AND FILTER CARTRIDGE WITH SUCH FILTER ELEMENTS AND FILTER CARTRIDGE WITH SUCH A FILTER ELEMENT
ÉLÉMENT FILTRANT À PLIS SPÉCIAL ET FILTRE À CASSETTE DOTÉ DES TELS ÉLÉMENTS FILTRANTS ET CARTOUCHE FILTRANTE DOTÉE D'UN TEL ÉLÉMENT FILTRANT

(43) Veröffentlichungstag der Anmeldung: 16.12.2020
(73) Patentinhaber: Carl Freudenberg KG, 69469 Weinheim (DE)
(72) Erfinder: Tapper, Renate, 64625 Bensheim (DE)

(56) Entgegenhaltungen:
- DE-A1- 19 849 998
- DE-A1-102015 007 653
- US-A1- 2013 062 276

## Beschreibung

Die Erfindung betrifft ein Filterelement mit Spezialfaltung gemäß dem Oberbegriff von Anspruch 1, einen Kassettenfilter mit solchen Filterelementen gemäß Anspruch 7 und eine Filterpatrone mit einem solchen Filterelement gemäß Anspruch 9.

### Stand der Technik

Aus dem Stand der Technik sind Kassettenfilter bekannt, beispielsweise aus der WO 2013/185878 A1, siehe dort Figur 7. Kassettenfilter besitzen einen Rahmen, in welchem eine Mehrzahl von Filterelementen aufgenommen ist. Die Filterelemente bestehen dabei in der Regel aus einem plissierten, d.h. gefalteten Filtermedium. Die Filterelemente sind derart in dem Rahmen aufgenommen, dass jeweils zwei aneinander angrenzende Filterelemente in einem spitzen Winkel zueinander angeordnet sind und somit eine V- förmige Anordnung besitzen. Die Durchströmungsrichtung des Kassettenfilters ist i.d.R. von der breiten Seite des V zur Spitze des V. Zu filternde Luft gelangt dann durch die Öffnung zwischen zwei Filterelementen in den Filter. Eine jeweilige V-förmige Anordnung von Filterelementen kann als Filterpaket bezeichnet werden. Aneinander angrenzende Filterelemente werden im Grenzbereich miteinander verbunden und abgedichtet, z.B. unter Zuhilfenahme von mit Kleber gefüllten Traversen. Im Bereich der Abdichtung kann keine Luft in den Filter einströmen. Je breiter die Abdichtungen sind, desto höher wird die Druckdifferenz des Filters. Schmalere Abdichtungen hingegen würden sich positiv auf den Druckverlust des Filters auswirken.

Um schmalere Abdichtungen zu realisieren ist es bekannt, die plissierten Filterelemente miteinander zu verschränken. Problematisch dabei ist jedoch, dass bei der Verwendung von Glasfaserpapier als Filtermedium auf Grund von seiner geringen mechanischen Festigkeit die Gefahr einer Zerstörung des Filtermediums besteht. Bei einer alternativen Lösung, welche einen Gehrungsschnitt durch die Filterelemente vorsieht, ist eine sichere Abdichtung der Filterelemente im Bereich ihrer Gehrung nur schwierig zu erreichen. Hier kann leicht eine potentielle Leckagestelle entstehen.

Aus dem Stand der Technik sind auch Filterpatronen bekannt, beispielsweise aus der DE 20 2016 005 074 U1. Bei Filterpatronen wird mindestens ein Filterelement zwischen einem Boden und einem Deckel angebracht, sodass sich eine Hülle aus einem Filtermedium ergibt, welche ein Volumen umschließt. Möglich sind z.B. zylindrische, kegelförmige oder auch quaderförmige Ausgestaltungen. Im Bereich des Deckels ist eine Öffnung vorgesehen, durch welche die zu filternde Luft aus dem Filter austreten kann. Je größer der Randbereich des Deckels bei vorgegebenem Außendurchmesser ausfällt und damit je kleiner die Öffnung wird, desto höher wird die Druckdifferenz des Filters. Die Breite des Randbereichs ist jedoch durch die Höhe des verwendeten Filterelements limitiert. Der Boden einer Patrone kann ebenfalls eine Öffnung aufweisen, z.B. wenn die Filterpatrone in ihrer Längsrichtung geteilt wird, oder eine Abdichtung in der Aufnahmevorrichtung vorgesehen ist. Aus dem Stand der Technik sind unterschiedlichste Filterpatronen bekannt, bei welchen entweder ein Filterelement verwendet wird oder auch mehrere Filterelemente zusammengesetzt werden.

Die DE 198 49 998 A1, die US 20013/0032276 A1 und die DE 10 2015 007 653 A1 zeigen jeweils Filterelemente für Filter mit einem Faltenbalg. Der Faltenbalg weist dabei neben "normalen" parallelen Falten auch sogenannte Gegenfaltungen auf. Diese Gegenfaltungen verlaufen von einem Faltenberg auf der einen Seite zu einem Faltental auf der anderen Seite.

### Aufgabenstellung

Aufgabe der vorliegenden Erfindung ist es ein Filterelement zu schaffen, welches dazu beiträgt, die Druckdifferenz von Kassettenfiltern und Filterpatronen zu reduzieren und damit die Filtrationsleistung zu verbessern. Weitere Aufgabe ist es, eine Ausführung des Filterelements auch mit in sich nicht formstabilen und gegebenenfalls brüchigen Materialien, wie zum Beispiel Glasfaserpapier, zu ermöglichen.

Auch ist es Aufgabe der Erfindung, Kassettenfilter und Filterpatronen mit verbesserter Filtrationsleistung zu schaffen.

### Technische Lösung

Gelöst wird diese Aufgabe durch ein Filterelement mit den Merkmalen von Anspruch 1.

Für das erfindungsgemäße Filterelement zur Reinigung von einem Fluid, insbesondere einem Luftstrom, wird ein gefaltetes Filtermedium verwendet. Erfindungsgemäß wurde als vorteilhaft erkannt, das Filterelement mit einer speziellen Faltung zu versehen. Die Faltung in dem Filterelement ist dadurch gekennzeichnet, dass eine schräge, das heißt nicht parallele Faltung vorliegt und sich nicht-rechteckige Faltflächen ergeben. Diese Faltung wird nachfolgend auch als Spezialfaltung oder spezielle Faltung bezeichnet. Die Faltung ist dabei derart, dass am Filterelement auf seiner ersten Seite je eine Anzahl x von Faltenbergen und Faltentälern und auf seiner anderen, zweiten Seite eine vielfache Anzahl y von Faltenbergen und Faltentälern vorliegt. Insbesondere ist n eine natürliche Zahl und es gilt y = n * x mit n = 2, 3, 4 ... Die Faltenberge und Faltentäler erstrecken sich dann von der ersten Seite A zur anderen, zweiten Seite B.

Unter einem Faltenberg wird dabei der höchste Punkt der Faltung verstanden. Unter einem Faltental hingegen wird der tiefste Punkt einer Faltung verstanden. Da die Faltung über die ganze Breite des Filterelements verläuft, ergibt sich - in Durchströmungsrichtung gesehen - ein trapezförmiger Querschnitt eines jeweiligen Filterelements. In anderen Worten: in der Seitenansicht des Filterelements ergibt sich ein Trapez, welches gleichschenklig-symmetrisch oder rampenförmig ausgebildet sein kann. Das bedeutet, dass sich die Höhe des Filterelements von einer ersten Seite A hin zur anderen, zweiten Seite B des Filterelements verkleinert. Bei dieser Eigenschaft geht es also nicht um die Dicke des Filtermediums, aus welchem das Filterelement gebildet wird, sondern um die Höhe des Filterelements, also um den "Höhenunterschied" zwischen Faltental und Faltenberg. Es liegt folglich eine Änderung der Höhe des Filterelements vor.

Bei der Verwendung der Begrifflichkeiten "Faltental" und "Faltenberg" ist folgendes zu beachten: Die Position des Betrachters bezüglich des Filterelements und sein Blickwinkel darauf entscheiden darüber, ob es sich bei einer Falzkante um einen Faltenberg oder ein Faltental handelt. Wird beispielsweise das Filterelement um 180 Grad gewendet, so wird aus einem Faltental ein Faltenberg und umgekehrt. Bei der bisherigen sowie bei der zukünftigen Verwendung der Begrifflichkeiten "Faltenberg" und "Faltental" soll diese ausschließlich einer eindeutigen Beschreibung des Filterelements dienen. Es soll keine dahingehende Beschränkung eingeführt werden, dass das Filterelement nur in einer bestimmten Einbaulage sichtbar sein könne oder verwendet werden dürfe.

Es wurde als besonders vorteilhaft erkannt, dass ein jeweiliges Filterelement in der Draufsicht eine rechteckige Form aufweist. Diese kann einfach in rechteckigen Rahmen eines Filters verwendet werden.

Es wurde als besonders vorteilhaft erkannt, dass die Anzahl von Faltenbergen und Faltentälern eines jeweiligen Filterelements auf der einen Seite der 2-fachen bis 3-fachen Anzahl der Faltenberge und Faltentäler auf der anderen Seite entspricht, das heißt y = 2 bis 3*x. Ein solches Filterelement stellt eine besonders vorteilhafte und daher bevorzugte Ausführungsform dar, da sich bei der Verwendung des Filterelements mit diesem Verhältnis eine gute Filtrationswirkung in einem Filter ergibt und ein optimiertes Strömungsverhalten des Filters vorliegt.

Es wurde weiter als besonders vorteilhaft erkannt, dass die Höhe des Filterelements auf der ersten Seite (A) im Bereich von h_{A}=20 bis 50 mm, auf der zweiten Seite (B) im Bereich von h_{B}=7 bis 25 mm liegt

In einer besonders vorteilhaften und daher bevorzugten Ausführungsform ist die gestreckte Länge eines jeweiligen Filterelements auf der ersten Seite (A) und auf der zweiten Seite (B) gleich groß. Mit gestreckter Länge ist die Länge des Filterelements gemeint, wenn die Faltungen beseitigt und das Filtermedium eben abgelegt würde. D.h. das Ausgangsmaterial des Filterelements kann ein übliches rechteckiges Filtermedium sein. Dies ermöglicht eine besonders kostengünstige Herstellung der Filterelemente.

Die Erfindung betrifft auch einen Kassettenfilter mit einem Rahmen und mit einer Mehrzahl von wie obenstehend beschriebenen Filterelementen. Die Filterelemente sind dabei derart in dem Rahmen aufgenommen, dass je mindestens zwei aneinander angrenzende Filterelemente in einem spitzen Winkel ϕ zueinander angeordnet sind, wobei die Falzkanten der aneinander angrenzenden Filterelemente die Schenkel des spitzen Winkels bilden. Die Filterelemente besitzen damit eine V-förmige Anordnung. In vorteilhafter Weise sind die Filterelemente wie obenstehend beschrieben ausgebildet und besitzen mindestens eine Spezialfaltung.

Durch die Verwendung der erfindungsgemäßen Filterelemente wird in vorteilhafter Weise erreicht, dass die Bereiche verkleinert werden, in welchen keine Luft den Filter durchströmen kann, nämlich die Grenzbereiche, in welchem die Filterelemente aneinander angrenzen und abgedichtet werden. Dank der Filterelemente mit Spezialfaltung kann dieser störende Bereich wesentlich verkleinert werden. Durch die Verkleinerung ergibt sich ein geringerer Druckverlust des Kassettenfilters und damit eine bessere Filtrationsleistung.

In einer besonders vorteilhaften und daher bevorzugten Weiterbildung des Kassettenfilters sind je zwei aneinander angrenzende Filterelemente mittelbar oder unmittelbar miteinander verklebt. Bei einer mittelbaren Verklebung kann eine Traverse vorgesehen sein, in welche ein Klebstoff eingebracht wird. Bei einer unmittelbaren Verklebung werden keine weiteren Elemente benötigt und der Klebstoff wird direkt auf die Filterelemente aufgebracht und diese direkt miteinander verbunden. Die Verklebung erstreckt sich insbesondere nur auf die Stirnseiten der Filterelemente. So bleibt die wirksame Filterfläche nahezu unverändert und die Filtrationsleistung wird kaum beeinträchtigt. Die Verklebung insbesondere mit Traversen eines Filterrahmens stellt sicher, dass zwischen den Filterelementen keine Leckagestellen bestehen und die zu filternde Luft - nicht ohne durch das Filtermedium eine Filtration zu erfahren - durch die Leckagestellen den Filter durchströmen kann. Als besonders vorteilhaft wird es angesehen, die Verklebung durch einen PUR-Verguss zu realisieren, d.h. aus Polyurethan.

Die Erfindung betrifft auch eine Filterpatrone mit einem Boden, einem mit einer mittigen Ausnehmung versehenen Deckel und mindestens einem zwischen dem Boden und dem Deckel angeordneten Filterelement. Das Filterelement ist wie obenstehend beschrieben ausgeführt und besitzt somit ein mit einer Spezialfaltung versehenes Filtermedium. Das Filterelement ist derart ausgeformt, dass sich eine Hülle aus einem Filtermedium ergibt, welche ein Volumen umschließt. Möglich sind z.B. zylindrische, kegelförmige oder auch quaderförmige Ausgestaltungen. Das Filterelement kann beispielsweise zu einer zylindrischen oder kegelstumpfförmigen Form gerollt sein, so dass eine zylindrische oder kegelstrumpfförmige Filterpatrone ausgebildet wird. In vorteilhafter Weise ist die Seite B des Filterelements mit der geringeren Höhe zur Ausnehmung des Deckels hin orientiert. Dasjenige Ende des Filterelements, welches die geringere Höhe aufweist, grenzt also an den Deckel an. Durch die Verwendung eines Filterelements mit Spezialfaltung wird in vorteilhafter Weise eine größere Ausnehmung des Deckels ermöglicht, d. h. ein Loch mit einem größeren Durchmesser. So kann der Druckverlust der Filterpatrone wesentlich reduziert und die Filtrationsleistung der Filterpatrone gesteigert werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar. Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: ein erfindungsgemäßes Filterelement
- Fig. 2: die Faltung des Filterelements auf der ersten Seite
- Fig. 3: die Faltung des Filterelements auf der zweiten Seite
- Fig. 4: eine vereinfachte Seitenansicht des Filterelements
- Fig. 5: eine Anordnungsmöglichkeit von Filterelementen für einen Kassettenfilter
- Fig. 6: einen Kassettenfilter
- Fig. 7: zwei Filterelemente mit einer Verklebung
- Fig. 8: eine Filterpatrone gemäß dem Stand der Technik
- Fig. 9: eine erfindungsgemäße Filterpatrone

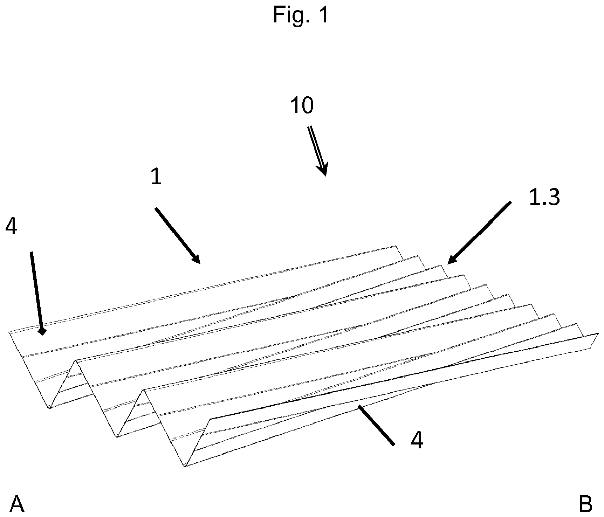

In Figur 1 ist ein Filterelement 10 für einen erfindungsgemäßen Filter 200, 300 dargestellt. Das Filterelement 10 ist über seine Fläche mit einer Faltung 1 versehen. Im Vergleich zu bekannten Filterelementen 10.1 ist das Filtermedium 4 des Filterelements 10 mit einer speziellen Faltung 1.3 versehen.

Das Filterelement 10 - siehe Figur 1 bis 4 - besitzt eine Faltung 1, so dass mehrere Faltenberge 1.1 und Faltentäler 1.2 gebildet werden.

Bei der Faltung 1 handelt es sich nicht um eine bekannte Leporello-Faltung bzw. Zick-Zack-Faltung, welche gemeinhin auch als Plissieren bezeichnet wird, und welche lauter gleichgroße, rechteckige Faltabschnitte aufweist. Vielmehr ist die Faltung 1 als spezielle Faltung 1.3 ausgeführt, so dass sich eine schräge, das heißt nicht parallele Faltung des Filterelements 10 ergibt. Die Faltung 1.3 ist dabei derart, dass auf der ersten Seite A eine erste Anzahl von Faltenbergen 1.1 und Faltentälern 1.2 vorliegt, wobei auf der anderen, zweiten Seite B eine vielfache Anzahl von Faltenbergen 1.1 und Faltentälern 1.2 ausgebildet ist. Ausgedrückt werden kann dies durch die Formel y = n * x mit y als der Anzahl Faltenberge und Faltentäler auf der zweiten Seite und x als der Anzahl auf der ersten Seite. n ist eine natürliche Zahl mit n = 2, 3, 4 .... In dem in Figur 1 dargestellten Ausführungsbeispiel wurde n = 3 gewählt, das heißt auf der zweiten Seite B findet sich eine dreifache Anzahl von Faltenbergen und Faltentälern 1.1 und 1.2 im Vergleich zur ersten Seite A.

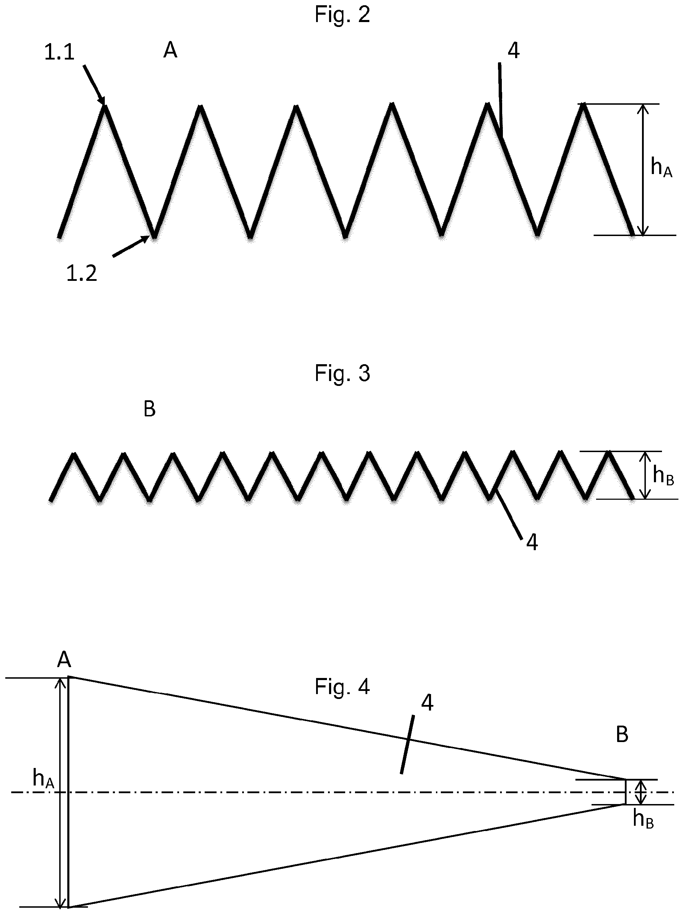

Wie sich die Anzahl der Faltenberge 1.1 und Faltentäler 1.2 auf der ersten Seite A und der zweiten Seite B des Filterelements 4 unterscheidet, ist in Figur 2 und 3 dargestellt. In der Figur 2 ist die Ansicht der Faltung des Filterelements 10 auf der ersten Seite A gezeigt. In der Darstellung von Figur 3 ist die Ansicht der Faltung des Filterelements 10 auf der zweiten Seite B gezeigt. Durch die unterschiedliche Anzahl von Faltenbergen 1.1 und Faltentälern 1.2 auf der ersten Seite A und der zweiten Seite B ergibt sich, dass die Höhe h_{A} des Filterelements 10 auf der ersten Seite A größer ist als die Höhe h_{B} des Filterelements 10 auf der zweiten Seite B. Die Höhe h_{A} bzw. h_{B} meint dabei jeweils den "Höhenunterschied" zwischen einem Faltental 1.2 und einem Faltenberg 1.1. Durch die unterschiedliche Anzahl an Faltenbergen 1.1 und Faltentälern 1.2 sowie die unterschiedliche Höhe h_{A} und h_{B} des Filterelements 10 ergibt sich dann, wenn sich die Faltung 1.3 über die Breite des Filterelements 10 erstreckt (d.h. von A bis B), ein trapezförmiger Querschnitt des Filterelements 10, wie er in Figur 4 dargestellt ist. Durch diese Ausgestaltung des Filterelements 10 wird das Strömungsverhalten im Filter 10 verbessert und der Filtrationswiderstand des Filters 10 reduziert.

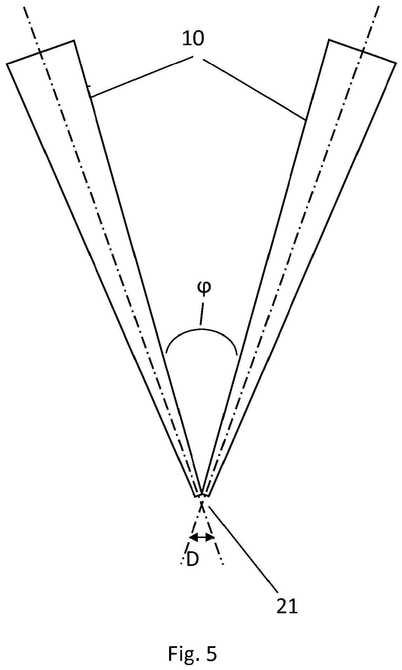

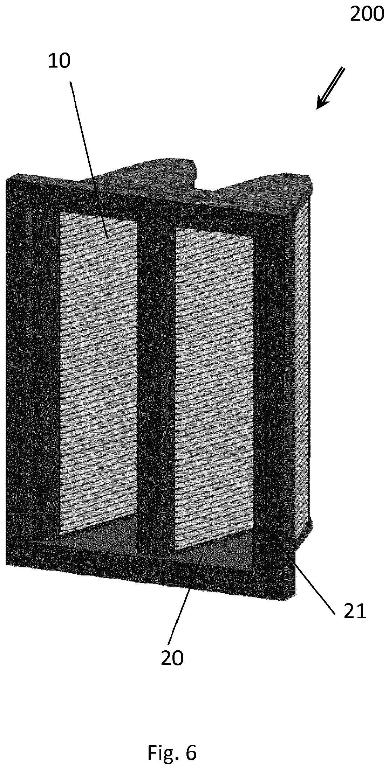

In Figur 5 ist dargestellt, wie die zuvor beschriebenen Filterelemente 10 zueinander positioniert werden können, so dass die Filterelemente 10 in einem spitzen Winkel ϕ zueinander angeordnet sind und von einem Rahmen eines Kassettenfilters 200 (siehe Fig. 6) aufgenommen werden können. Die Falzkanten von zwei aneinander angrenzenden Filterelementen 10 bilden dabei die Schenkel des spitzen Winkels ϕ. Dadurch ergibt sich, dass die Filterelemente 10 eine V-förmige Anordnung besitzen. Durch die Verwendung dieser Filterelemente 10 kann - im Gegensatz zu Filterelementen, welche nicht mit einer Spezialfaltung 1.3 versehen sind und in ihrer Seitenansicht eine rechteckige Ausgestaltung aufweisen - der Bereich D verkleinert werden, wobei der Bereich D derjenige ist, der im Grenzbereich liegt und wegen der Abdichtung der Filterelemente nicht von Luft L durchströmbar ist. Durch die Verkleinerung dieses Bereichs D kann der abgedichtete und nicht durchströmbare Bereich verkleinert werden und die Druckdifferenz eines Filters 200 mit solchen Filterelementen 10 reduziert werden.

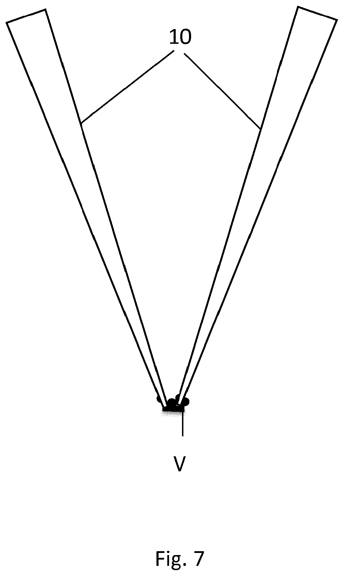

Im Grenzbereich, wo die Filterelemente 10 aneinander angrenzen und gegeneinander abgedichtet sind, könnten leistenförmige Traversen 21 vorgesehen sein. Damit die Filterelemente 10 gegenüber dem Rahmen 20 und den Traversen 21 abgedichtet sind und keine Bypässe vorliegen, wo Luft L den Filter 200 passieren kann ohne die Filterelemente 10 zu durchströmen, können die Filterelemente 10 im Bereich der Traverse 21 miteinander verklebt sein. Eine solche Verklebung V, welche beispielsweise durch einen Verguss mit PUR Klebstoff erfolgen kann, ist in Figur 7 angedeutet. Die Traversen 21 können ebenfalls schmal ausgeführt sein. Dadurch kann der Bereich D, welcher nicht von Luft L durchströmt werden kann, klein gehalten werden. Aufgenommen werden die Filterelemente 10 von einem Rahmen 20 und bilden so einen Kassettenfilter 200 mit V-förmiger Anordnung der Filterelemente 10 (siehe Figur 6).

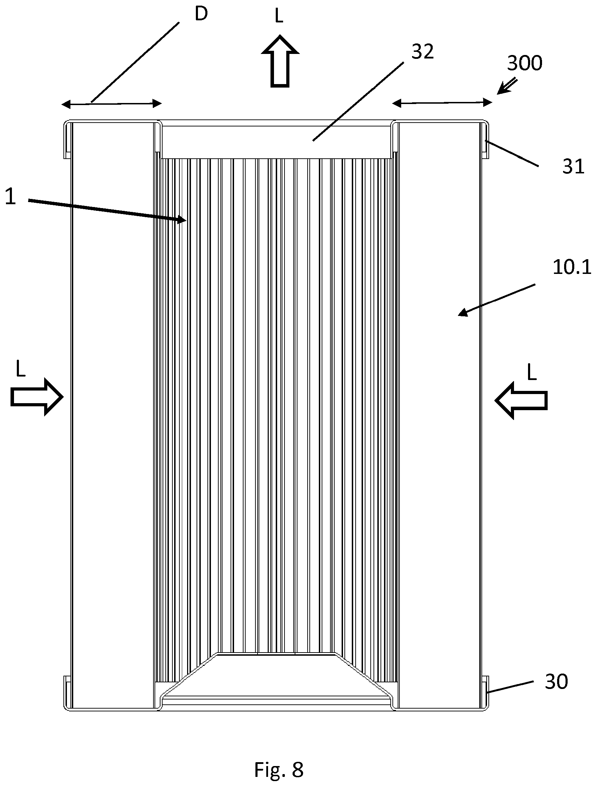

In Figur 8 ist eine Filterpatrone 300 gemäß dem Stand der Technik im Schnitt dargestellt. Die Filterpatrone 300 besitzt einen Boden 30, einen mit einer mittigen Ausnehmung 32 versehenen Deckel 31 und ein zwischen Deckel 31 und Boden 30 angeordnetes Filterelement 10.1, wobei das Filterelement 10.1 in eine zylindrische Form gebracht ist. Das Filterelement 10.1 ist wie üblich plissiert, d.h. nicht mit einer Spezialfaltung 1.3 versehen.

Durch die Ausnehmung, also die Öffnung 32 im Deckel 31, kann die zu filternde Luft L aus dem Filter 300 austreten. Je größer der Randbereich des Deckels 31 ausfällt und damit je kleiner die Öffnung 32, desto höher wird die Druckdifferenz des Filters 300. Die Breite D des Randbereichs ist jedoch durch die Höhe des verwendeten Filterelements 10.1 limitiert, also die Faltenhöhe des verwendeten Filterelements 10.1, nämlich die Höhe des Faltabschnitts der Plissierung.

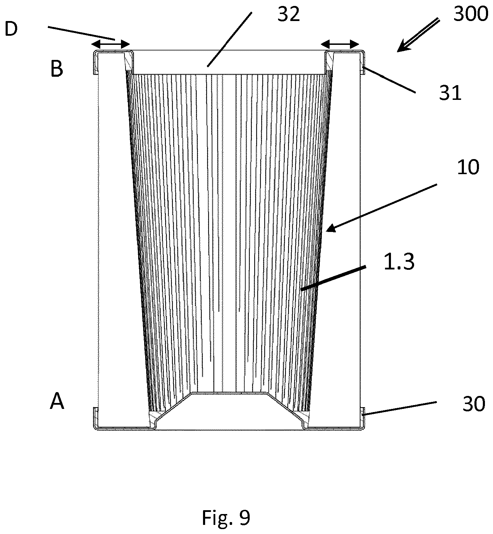

In Figur 9 ist ebenfalls eine Filterpatrone 300 dargestellt, welche genauso von Luft L durchströmt wird und dabei eine Reinigung der Luft L bewirkt wird. Im Unterschied zur Filterpatrone 300 nach dem Stand der Technik wurde jedoch bei dieser erfindungsgemäßen Filterpatrone 300 ein Filterelement 10 mit einer Spezialfaltung 1.3 verwendet. Die Seite B des Filterelements 10 mit der geringeren Höhe h_{B} ist zur Ausnehmung 32 hin orientiert, derart, dass das Filterelement 10 im Bereich des Deckels 31 eine geringere Höhe aufweist, sodass der Randbereich des Deckels 31 kleiner und der Durchmesser der Ausnehmung 32 größer ausfallen kann. In anderen Worten: der Bereich D, welcher nicht von Luft durchströmt werden kann, kann reduziert werden.

In der dargestellten Ausführungsform ergibt sich eine kontinuierliche Änderung der Höhe des Filterelements und damit eine kontinuierliche Aufweitung des Innenraumes der Filterpatrone 300, d.h. es liegen keine Knicke am Filterelement 10 vor.

### Bezugszeichenliste

- 1: Faltung
- 1.1: Faltenberg
- 1.2: Faltental
- 1.3: Spezialfaltung / spezielle Faltung
- 4: Filtermedium

- 10: Filterelement mit Spezialfaltung
- 10.1: Filterelement ohne Spezialfaltung

- 15.1: Faltenberg
- 15.2: Faltental

- 20: Rahmen
- 21: Traverse

- 30: Boden
- 31: Deckel
- 32: Ausnehmung (Loch)

- 200: Kassettenfilter
- 300: Filterpatrone

- h_{A,B}: Höhe des Filterelements

- A: erste Seite
- B: zweite Seite
- D: Bereich, der von Luft nicht durchströmbar ist
- L: Luftstrom
- V: Verklebung

- ϕ: Winkel zwischen aneinander angrenzenden Filterelementen

## Patentansprüche

1. Filterelement (10) zur Reinigung von einem Fluid aufweisend ein gefaltetes Filtermedium (4), wobei das Filtermedium (4) mit Faltungen (1.3) versehen ist, derart, dass am Filtermedium (4) auf seiner ersten Seite (A) je eine Anzahl (x) Faltenberge (1.1) und Faltentäler (1.2) und auf seiner anderen, zweiten Seite (B) eine vielfache Anzahl (y=n*x) Faltenberge (1.1) und Faltentäler (1.2), ausgebildet ist, wobei die Faltung (1.3) einen trapezförmigen Querschnitt des Filtermediums bewirkt und sich die Höhe (h_{A}, h_{B}) des Filtermediums von der ersten Seite (A) hin zur zweiten Seite (B) verkleinert **dadurch gekennzeichnet, dass** die Faltenberge (1.1) und Faltentäler (1.2) von der ersten Seite (A) zur zweiten Seite (B) verlaufen.

2. Filterelement nach Anspruch 1, **dadurch gekennzeichnet, dass** die Anzahl (y=n*x) Faltenberge (1.1) und Faltentäler (1.2) auf der zweiten Seite (B) der 2-fachen bis 3-fachen (n=2...3) Anzahl (x) der Faltenberge (1.1) und Faltentäler (1.2) auf der ersten Seite (A) entspricht (y=2...3*x).

3. Filterelement nach Anspruch 1 oder 2, **dadurch gekennzeichnet, dass** das gefaltete Filterelement (10) in der Seitenansicht die Form eines Trapezes besitzt.

4. Filterelement nach einem der vorangehenden Ansprüche, **dadurch gekennzeichnet, dass**
die Höhe des Filterelements (10) auf der ersten Seite (A) im Bereich von h_{A}=20-50 mm, auf der zweiten Seite (B) im Bereich von h_{B}=7-25 mm liegt.

5. Filterelement nach einem der vorangehenden Ansprüche, **dadurch gekennzeichnet, dass**
die gestreckte Länge eines jeweiligen Filtermediums (4) auf der ersten Seite (A) und auf der zweiten Seite (B) gleich groß ist.

6. Filterelement nach einem der vorangehenden Ansprüche, **dadurch gekennzeichnet, dass**
das Filtermedium (4) ein Vliesstoff oder ein Glasfaserpapier ist und / oder dass das Filtermedium eine Membran enthält.

7. Kassettenfilter (200) mit einem Rahmen (20) und einer Mehrzahl von Filterelementen (10) mit einem mit einer Faltung (1.3) versehenen Filtermedium (4), wobei die Filterelemente (10) derart in dem Rahmen (20) aufgenommen sind, dass je mindestens zwei aneinander angrenzende Filterelemente (10) in einem spitzen Winkel (ϕ) zueinander angeordnet sind und so eine V-förmige Anordnung besitzen **dadurch gekennzeichnet,**
**dass** mindestens ein Filterelement (10) nach einem der vorangehenden Ansprüche ausgebildet ist.

8. Kassettenfilter nach Anspruch 7 **dadurch gekennzeichnet,**
**dass** je zwei aneinander angrenzende Filterelemente (10) miteinander verklebt (V) sind.

9. Filterpatrone (300) mit einem Boden (30), einem mit einer mittigen Ausnehmung (32) versehenen Deckel (31) und mindestens einem zwischen Deckel (31) und Boden (30) angeordneten Filterelement (10), **dadurch gekennzeichnet,**
**dass** Filterelement (10) nach einem der Ansprüche 1 - 6 ausgeführt ist, und die zweite Seite (B) mit geringerer Höhe (h_{B}) zum Deckel (31) hin orientiert ist.

## Claims

1. Filter element (10) for cleaning a fluid, having a folded filter medium (4), wherein the filter medium (4) is provided with foldings (1.3) such that, on the filter medium (4), in each case a number (x) of fold peaks (1.1) and fold troughs (1.2) are formed on the first side (A) thereof and a multiple number (y=n*x) of fold peaks (1.1) and fold troughs (1.2) are formed on the other, second side (B) thereof, wherein the folding (1.3) gives rise to a trapeziform cross section of the filter medium, and the height (h_{A}, h_{B}) of the filter medium decreases from the first side (A) to the second side (B), **characterized in that** the fold peaks (1.1) and fold troughs (1.2) extend from the first side (A) to the second side (B).

2. Filter element according to Claim 1, **characterized in that**
the number (y=n*x) of fold peaks (1.1) and fold troughs (1.2) on the second side (B) corresponds to 2 times to 3 times (n=2...3) the number (x) of fold peaks (1.1) and fold troughs (1.2) on the first side (A) (y=2...3*x).

3. Filter element according to Claim 1 or 2, **characterized in that**
the folded filter element (10), in side view, has the shape of a trapezium.

4. Filter element according to one of the preceding claims, **characterized in that**
the height of the filter element (10) on the first side (A) lies in the range of h_{A}=20-50 mm, and on the second side (B) lies in the range of h_{B}=7-25 mm.

5. Filter element according to one of the preceding claims, **characterized in that**
the stretched length of a respective filter medium (4) on the first side (A) and on the second side (B) is the same.

6. Filter element according to one of the preceding claims, **characterized in that**
the filter medium (4) is a nonwoven material or a glass fibre paper, and/or **in that** the filter medium comprises a membrane.

7. Cassette filter (200) having a frame (20) and having a plurality of filter elements (10) which have a filter medium (4) provided with folding (1.3), wherein the filter elements (10) are held in the frame (20) such that in each case at least two mutually adjoining filter elements (10) are arranged at an acute angle (ϕ) to one another and thus exhibit a V-shaped arrangement, **characterized in that** at least one filter element (10) is formed according to one of the preceding claims.

8. Cassette filter according to Claim 7, **characterized**
**in that** in each case two mutually adjoining filter elements (10) are adhesively bonded (V) to one another.

9. Filter cartridge (300) having a base (30), having a cover (31) provided with a central cutout (32) and having at least one filter element (10) arranged between the cover (31) and the base (30), **characterized**
**in that** the filter element (10) is designed according to one of Claims 1-6, and the second side (B), with the smaller height (h_{B}), is oriented towards the cover (31).

## Revendications

1. Elément filtrant (10) destiné à nettoyer un fluide et comprenant un milieu filtrant plissé (4), le milieu filtrant (4) étant pourvu de plis (1.3) de sorte que le premier côté (A) du milieu filtrant (4) comporte un nombre (x) de sommets de pli (1.1) et de creux de pli (1.2) et son autre, deuxième, côté (B) comporte un nombre multiple (y=n*x) de sommets de pli (1.1) et de creux de pli (1.2), le pli (1.3) générant une section transversale trapézoïdale du milieu filtrant et la hauteur (h_{A}, h_{B}) du milieu filtrant diminuant du premier côté (A) au deuxième côté (B), **caractérisé en ce que** les sommets de pli (1.1) et les creux de pli (1.2) s'étendent du premier côté (A) au deuxième côté (B).

2. Elément filtrant selon la revendication 1, **caractérisé en ce que**
le nombre (y=n*x) de sommets de pli (1.1) et de creux de pli (1.2) sur le deuxième côté (B) correspond à 2 à 3 fois (n=2...3) le nombre (x) de sommets de pli (1.1) et de creux de pli (1.2) sur le premier côté (A) (y=2...3*x).

3. Elément filtrant selon la revendication 1 ou 2, **caractérisé en ce que** l'élément filtrant plié (10) a la forme d'un trapèze en vue de côté.

4. Elément filtrant selon l'une des revendications précédentes, **caractérisé en ce que**
la hauteur de l'élément filtrant (10) sur le premier côté (A) est dans la gamme h_{A}=20 à 50 mm, sur le deuxième côté (B) dans la gamme de h_{B}=7 à 25 mm.

5. Elément filtrant selon l'une des revendications précédentes, **caractérisé en ce que**
la longueur étirée d'un milieu filtrant respectif (4) sur le premier côté (A) et sur le deuxième côté (B) est la même.

6. Elément filtrant selon l'une des revendications précédentes, **caractérisé en ce que**
le milieu filtrant (4) est un non-tissé ou un papier de fibres de verre et/ou **en ce que** le milieu filtrant contient une membrane.

7. Filtre à cassette (200) comprenant un cadre (20) et une pluralité d'éléments filtrants (10) pourvus d'un milieu filtrant (4) muni d'un pli (1.3), les éléments filtrants (10) étant reçus dans le cadre (20) de manière à ce qu'au moins deux éléments filtrants adjacents (10) soient disposés l'un par rapport à l'autre en formant un angle aigu (ϕ) et présentent ainsi une disposition en forme de V, **caractérisé en ce que**
au moins un élément filtrant (10) est conçu selon l'une des revendications précédentes.

8. Filtre à cassette selon la revendication 7, **caractérisé en ce que**
deux éléments filtrants adjacents (10) sont collés l'un à l'autre (V).

9. Cartouche filtrante (300) comprenant un fond (30), un couvercle (31) pourvu d'un évidement central (32) et au moins un élément filtrant (10) disposé entre le couvercle (31) et le fond (30), **caractérisé en ce que** l'élément filtrant (10) est réalisé selon l'une des revendications 1 à 6, et le deuxième côté (B) de hauteur (h_{B}) plus faible est orienté en direction du couvercle (31).
